(19) Europäisches Patentamt
European Patent Office
Office européen des brevets

(11) Veröffentlichungsnummer : **0 085 867**
**B1**

(12) # EUROPÄISCHE PATENTSCHRIFT

(45) Veröffentlichungstag der Patentschrift : **07.08.85**

(51) Int. Cl.⁴ : **C 01 B 33/32**

(21) Anmeldenummer : **83100507.9**

(22) Anmeldetag : **21.01.83**

(54) **Verfahren zur kontinuierlichen Herstellung von Natriummetasilikat.**

(30) Priorität : **26.01.82 DE 3202376**

(43) Veröffentlichungstag der Anmeldung : **17.08.83 Patentblatt 83/33**

(45) Bekanntmachung des Hinweises auf die Patenterteilung : **07.08.85 Patentblatt 85/32**

(84) Benannte Vertragsstaaten : **AT BE DE FR GB IT NL SE**

(56) Entgegenhaltungen :
**DE-A- 2 118 661**
**DE-B- 1 567 585**
**DE-B- 2 014 674**
**DE-C- 968 034**
**DK-A- 50 046**

(73) Patentinhaber : **HOECHST AKTIENGESELLSCHAFT**
**Postfach 80 03 20**
**D-6230 Frankfurt am Main 80 (DE)**

(72) Erfinder : **Mayer, Manfred, Dr.**
**Königsberger Strasse 8**
**D-6272 Niedernhausen/Taunus (DE)**
Erfinder : **Nöltner, Gerhard**
**Sossenheimer Weg 33a**
**D-6230 Frankfurt am Main 80 (DE)**
Erfinder : **Wirtz, Peter, Dr.**
**Wiesbadener Strasse 135**
**D-6240 Königstein/Taunus (DE)**

EP 0 085 867 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft ein Verfahren zur kontinuierlichen Herstellung von wasserfreiem Natriummetasilikat aus Quarzsand und Natriumhydroxid.

Aus der dänischen Patentschrift 50 046 ist ein diskontinuierliches Verfahren sur Herstellung von Natriummetasilikat bekannt, bei dem Quarzsand und handelsübliche Natronlauge bei Temperaturen von 200 bis 300 °C umgesetzt werden. Beim Erhitzen in einer Drehtrommel oder einem Rührwerk bildet sich eine teigartige Masse, die Klumpen bildet und bei höheren Temperaturen von selbst in ein weißes Metasilikatpulver großer Feinheit zerfällt. Das anfallende Natriummetasilikat ist teilweise hydratisiert und enthält in Abhängigkeit vom angewandten Molverhältnis (x = $NaOH/SiO_2$) mehr oder weniger große Mengen an Natriumhydroxid.

Dieses Verfahren hat den Nachteil, daß es nur diskontinuierlich durchgeführt werden kann und daher nur eine geringe Raum-Zeit-Ausbeute möglich ist. Ferner finden sich häufig im anfallenden Metasilikat-Pulver unerwünschte Mengen eines wasserfreien « glasigen Silikats ». Es hat sich gezeigt, daß dieser Anteil besonders hoch ist, wenn der Überschuß an eingesetzter Natronlauge niedrig ist und die Verweilzeit im Rührkessel oder der Drehtrommel länger ist. In diesen Apparaten kann das Reaktionsgemisch auch nicht intensiv durchgemischt werden, so daß nach abgelaufener Reaktion die Zeit abgewartet werden muß, bis das Reaktionsprodukt von selbst zerfällt. Das Reaktionsprodukt bleibt daher längere Zeit bei hohen Temperaturen. Die Anwendbarkeit des Rührkessel-Verfahrens ist dadurch eingeschränkt, daß der verwendbare Überschuß an Natriumhydroxid maximal 20 % beträgt. Höhere Überschüsse würden beim Durchlaufen der plastischen Phase Schwierigkeiten beim Rühren hervorrufen.

Es bestand daher die Aufgabe, ein kontinuierliches Verfahren zur Herstellung von Natriummetasilikat zu finden, das die oben gezeigten Nachteile nicht aufweist. Dieses Verfahren sollte einfach arbeiten, ohne manuelle Eingriffe ablaufen und hohe Raum-Zeit-Ausbeuten aufweisen.

Es wurde nun ein Verfahren zur Herstellung von feinpulvrigem Natriummetasilikat durch Erhitzen einer innigen Mischung aus Quarzsand und wäßriger Natronlauge auf Temperaturen von ca. 300 °C gefunden, das dadurch gekennzeichnet ist, daß die eingesetzte Mischung ein Molverhältnis $NaOH/SiO_2$ von 2,0 bis 4,0 aufweist, man die Mischung in so dünner Schicht auf einer Unterlage ausbreitet, daß eine Krustenbildung auf der Schichtoberfläche vermieden wird, man die Unterlage kontinuierlich durch einen Ofen wandern läßt, der auf Temperaturen von 350-600 °C erhitzt wird und man die Verweilzeit der Unterlage im Ofen so bemißt, daß sie den Ofen wieder verläßt, wenn die Temperatur im Reaktionsgemisch auf 230-360 °C angestiegen ist.

Besonders günstig sind Molverhältnisse $NaOH/SiO_2$ von 2,2 bis 2,5, insbesondere 2,35 bis 2,45. Es hat sich gezeigt, daß bei diesen Molverhältnissen im Reaktionsgemisch besonders wenig unlösliche Bestandteile auftreten.

Die Mischung der Komponenten NaOH und $SiO_2$ kann nach mehreren Verfahren erfolgen. Beispielsweise kann man sie kontinuierlich in einem Apparat mit Knetwerkzeugen oder in einem schnell laufenden Intensivmischer vermengen. Die optimale Vermischung der beiden Komponenten soll dafür sorgen, daß mit Sicherheit örtlich kein Überschuß an $SiO_2$ auftritt, der zu einer Verunreinigung des Reaktionsgemisches durch Quarzsand führen würde.

Die durch inniges Vermischen hergestellte Suspension von Quarzsand und Natronlauge wird am besten auf das Band eines Durchlaufofens aufgegeben. Man kann aber auch das Gemisch in hintereinander angeordnete Schalen geben, die kontinuierlich durch den Ofen gezogen werden.

Bevorzugte Ofentemperaturen liegen bei 400 bis 550 °C. Falls die eingesetzte Suspension in größeren Schichtdicken auf die Unterlage ausgebreitet wird, besteht die Gefahr, daß sich auf der Oberfläche Krusten bilden, die in erhöhtem Maße unlösliche Bestandteile aufweisen. Besonders gute Ergebnisse wurden erzielt mit Schichtdicken unter 3 cm, insbesondere unter 2 cm. Nach unten ist die Schichtdicke nur durch wirtschaftliche Überlegungen begrenzt.

Es ist bevorzugt, wenn das Reaktionsgemisch den Ofen wieder verläßt, sobald die Temperatur im Gemisch 300 °C erreicht hat. Bei einer Ofentemperatur von 500 °C vergehen etwa 30 bis 90 Minuten, je nach Schichtdicke, bis im Produkt eine Temperatur von 300 °C erreicht worden ist.

Die Umsetzung läßt sich durch die Reaktionsgleichung

$$SiO_2 + x\,NaOH \rightarrow Na_2SiO_3 + (x - 2)\,NaOH + H_2O$$

beschreiben. Nach dem Verfahren der dänischen Patentschrift 50 046 ist für diese Reaktion eine ständige Bewegung des Reaktionsgemisches erforderlich. Es ist daher überraschend, daß beim vorliegenden Verfahren ein reines Produkt mit niedrigem Anteil an unlöslichen Bestandteilen erhalten wird.

Die Konzentration der eingesetzten Natronlauge liegt vorzugsweise im Bereich von 50 bis 80 Gew.-%. Besonders bevorzugt ist der Bereich von 70 bis 80 Gew.-%. Höhere Konzentrationen an Natronlauge sind ebenfalls möglich, aber erfordern erhöhte Temperaturen beim Vermischen mit Quarzsand. Dies kann zu erhöhter Beanspruchung der Mischapparatur führen. Natronlauge von 70 bis 80 Gew.-% erlaubt jedoch Verarbeitungstemperaturen von unter 100 °C. Bei diesen Temperaturen besteht keine Gefahr der Laugenkorrosion gegenüber V4A-Stahl. Andererseits ergibt Natronlauge der angegebenen Konzentration

Suspensionen einer so hoher Viskosität, daß während der Umsetzung in der ruhenden Schicht noch keine wesentliche Sedimentation der Quarzpartikel zu beobachten ist.

Überraschenderweise läßt sich anstelle eines Gemisches Natronlauge/Quarzsand erfindungsgemäß auch ein Gemisch aus festem Natriumhydroxid und Quarzsand einsetzen. Die Verweilzeit der Unterlage wird in diesem Fall vorzugsweise so bemessen, daß sie den Ofen wieder verläßt, wenn die Temperatur im Reaktionsgemisch auf 290-310 °C angestiegen ist. Dabei soll das Natriumhydroxid möglichst in feiner Verteilung, z. B. in Schuppenform oder in Form von Prills, vorliegen. Die Vermischung erfolgt dabei vorzugsweise bei niedrigen Temperaturen, wie z. B. 20 °C.

Die eingesetzte Unterlage soll aus einem Material bestehen, das gegenüber heißer konzentrierter Natronlauge beständig ist. Bewährt haben sich Nickel und Nickel-Kupfer-Ligierungen.

Das bei der Umsetzung anfallende Natriummetasilikat hat ein Schüttgewicht von ca. 750 kg/$m^3$ und eine mittlere Korngröße von ca. 0,25 mm. Das Schüttgewicht läßt sich durch Preßagglomerierung noch erhöhen.

Die Erfindung wird durch die folgende Beispiele näher erläutert :

Beispiel 1

In einen Horizontal-Schnellmischer mit Pflugscharschaufeln wird Quarzsand mit einer mittleren Korngröße $d_{50}$ von 30 µm und 70 %ige Natronlauge bei 80 °C und einer mittleren Verweilzeit von 15 min innig vermischt. Entsprechend einem Molverhältnis $NaOH/SiO_2$ von 2,6 : 1 werden 6 kg/h Quarzsand und 14,9 kg/h 70 %ige Natronlauge in den Mischer gespeist. Die Suspension wird in Schalen von 500 mm Ø mit einer Kragenhöhe von 200 mm bis zu einer Produkthöhe von 2 cm gefüllt und in einen Durchlaufofen gegeben, der auf 500 °C erhitzt ist. Der bei der Eindampfung der Natronlauge und der Umsetzung anfallende Wasserdampf wird über eine Entlüftungsöffnung abgezogen. Die Bandgeschwindigkeit des Ofens wird dabei so gewählt, daß nach einer Verweilzeit von 55 min die Schalen mit dem Produkt den Ofen verlassen. Die Produkttemperatur betrug beim Austritt aus dem Ofen 300 °C. In den Schalen war inzwischen das umgesetzte feinteilige Metasilikat auf eine Produkthöhe von 4 cm angewachsen. Das aus den Schalen entnommene fertige Metasilikat enthielt einen unlöslichen Bestandteil von 0,02 %, das Schüttgewicht betrug 750 kg/$m^3$ und die mittlere Korngröße $d_{50}$ ca. 250 µm.

Beispiel 2

Beispeil 1 wird wiederholt, jedoch mit folgenden abgeänderten Parametern :

| | |
|---|---|
| Molverhältnis | 2,9 : 1 |
| Natronlauge | 16,7 kg/h 70 %ig |
| Quarzsand | 6 kg/h |
| Schichthöhe | 2 cm |
| Produkttemperatur beim Verlassen des Ofens | 300 °C |
| Verweilzeit im Ofen | 55 min. |
| Der unlösliche Rückstand im Produkt beträgt | 0,06 % |
| Das Schüttgewicht | 750 kg/$m^3$ |

Beispiel 3

Beispiel 1 wird wiederholt, jedoch mit folgenden geänderten Parametern :

| | |
|---|---|
| Molverhältnis | 2,0 : 1 |
| Natronlauge | 11,4 kg/h 70 %ig |
| Quarzsand | 6 kg/h |
| Schichthöhe | 2 cm |
| Produkttemperatur beim Verlassen des Ofens | 300 °C |
| Verweilzeit im Ofen | 55 min. |
| Der unlösliche Rückstand im Produkt beträgt | 1,36 % |
| Das Schüttgewicht | 750 kg/$m^3$ |

Beispiel 4

Beispiel 1 wird unter etwas abgeänderten Bedingungen wiederholt :

| | |
|---|---|
| Molverhältnis | 2,6 : 1 |
| Natronlauge | 20,8 kg/h 50 %ig |
| Quarzsand | 6 kg/h |
| Schichthöhe | 2 cm |
| Produkttemperatur beim Verlassen des Ofens | 300 °C |

| | |
|---|---|
| Verweilzeit im Ofen | 45 min. |
| Der unlösliche Rückstand im Produkt beträgt | 1,76 % |
| Das Schüttgewicht | 750 kg/$m^3$ |

Beispiel 5

In einen Lödige-Schnellmischer wird Quarzsand mit einer mittleren Korngröße $d_{50}$ von 30 µm und Ätznatron in geprillter Form mit einer mittleren Korngröße von 2 mm bei 20 °C und einer mittleren Verweilzeit von 5 min innig vermischt. Entsprechend einem Molverhältnis NaOH/$SiO_2$ von 2.6 : 1 werden 6 kg/h Quarzsand und 10,4 kg/h Ätznatron in den Mischer gespeist. Die Feststoffmischung wird wie in Beispiel 1 in Schalen von 500 mm Ø mit einer Kragenhöhe von 200 mm bis zu einer Produkthöhe von 2 cm gefüllt und in einen Durchlaufofen gegeben. Dieser ist auf 550 °C erhitzt. Der bei der Umsetzung anfallende Wasserdampf wird über eine Entlüftungsöffnung abgezogen. Die Bandgeschwindigkeit des Ofens wird dabei so gewählt, daß nach einer Verweilzeit von 20 min die Schalen mit dem Produkt den Ofen verlassen. Die Produkttemperatur beträgt beim Austritt aus dem Ofen 305 °C. In den Schalen ist inzwischen das umgesetzte feinteilige Metasilikat auf eine Produkthöhe von 4 cm angewachsen. Das aus den Schalen entnommene fertige Metasilikat enthält einen unlöslichen Bestandteil von 0,25 %, das Schüttgewicht betrug 770 kg/$m^3$ und die mittlere Korngröße $d_{50}$ ca. 250 µm.

**Patentansprüche**

1. Verfahren zur Herstellung von feinpulvrigem Natriummetasilikat durch Erhitzen einer innigen Mischung aus Quarzsand und wäßriger Natronlauge auf Temperaturen von ca. 300 °C, dadurch gekennzeichnet, daß die Mischung ein Molverhältnis NaOH/$SiO_2$ von 2,0 bis 4,0 aufweist, man die Mischung in so dünner Schicht auf einer Unterlage ausbreitet, daß eine Krustenbildung auf der Schichtoberfläche vermieden wird, man die Unterlage kontinuierlich durch einen Ofen wandern läßt, der auf Temperaturen von 350 bis 600 °C erhitzt wird und man die Verweilzeit der Unterlage so bemißt, daß sie den Ofen wieder verläßt, wenn die Temperatur im Reaktionsgemisch auf 230 bis 360 °C angestiegen ist.

2. Verfahren zur Herstellung von feinpulvrigem Natriummetasilikat aus Quarzsand und Natriumhydroxid dadurch gekennzeichnet, daß man Quarzsand und festes Natriumhydroxid in Molverhältnissen NaOH/$SiO_2$ von 2,0 bis 4,0 innig vermischt, man die Mischung in so dünner Schicht auf einer Unterlage ausbreitet, daß eine Krustenbildung auf der Schichtoberfläche vermieden wird, man die Unterlage kontinuierlich durch einen Ofen wandern läßt, der auf Temperaturen von 350 bis 600 °C erhitzt wird und man die Verweilzeit der Unterlage so bemißt, daß sie den Ofen wieder verläßt, wenn die Temperatur im Reaktionsgemisch auf 230° bis 360 °C angestiegen ist.

**Claims**

1. A process for the manufacture of finely powdered sodium-metasilicate by heating a well mixed mixture of quartz sand and aqueous sodium hydroxide solution up to temperatures of about 300 °C, wherein

a) the mixture has a molar ratio of NaOH/$SiO_2$ of from 2.0 to 4.0,

b) the mixture is spread on a support in such a thin layer that formation of a crust on the surface of the layer is avoided,

c) the support is moved continuously through an oven which has been heated to a temperature of from 350 to 600 °C and

d) the dwelling time of the support in the oven is adjusted such that the support leaves the oven when the temperature in the reaction mixture has risen to 230 to 360 °C.

2. A process for the manufacture of finely powdered sodium metasilicate from quartz sand and sodium hydroxide which comprises mixing thoroughly quartz sand and solid sodium hydroxide in a molar ratio of NaOH/$SiO_2$ of from 2.0 to 4.0, spreading the mixture on a support in such a thin layer that formation of a crust on the surface of the layer is avoided, moving the support continuously through an oven which has been heated to a temperature of from 350 to 600 °C and adjusting the dwelling time of the support in the oven such that the support leaves the oven when the temperature in the reaction mixture has risen to 230 to 360 °C.

**Revendications**

1. Procédé pour préparer du métasilicate de sodium en poudre fine, par chauffage d'un mélange intime de sable quartzeux et de lessive aqueuse de soude jusqu'à des températures d'environ 300 °C, procédé caractérisé en ce que le mélange présente un rapport molaire NaOH/$SiO_2$ de 2,0 à 4,0, on étale le mélange sur un support en une couche si mince que l'on évite la formation de croûtes à la surface de la

couche, on fait circuler le support continuellement dans un four qui est chauffé à des températures de 350 à 600 °C et l'on règle le temps de séjour du support de manière qu'il quitte le four quand la température a augmenté dans le mélange réactionnel pour atteindre 230 à 360 °C.

2. Procédé pour préparer du métasilicate de sodium en poudre fine à partir de sable quartzeux et d'hydroxyde de sodium, procédé caractérisé en ce qu'on mélange intimement du sable quartzeux et de l'hydroxyde de sodium solide selon des rapports molaires $NaOH/SiO_2$ de 2,0 à 4,0, on étale sur un support le mélange en une couche si mince que l'on évite la formation de croûtes à la surface de la couche, on fait circuler continuellement le support dans un four qui est chauffé jusqu'à des températures de 350 à 600 °C et l'on règle le temps de séjour du support de manière qu'il quitte le four quand la température a augmenté dans le mélange réactionnel pour atteindre 230° à 360 °C.